# EUROPEAN PATENT APPLICATION

(11) **EP 3 276 181 A1**
(43) Date of publication of application: **31.01.2018**
(21) Application number: 15885860.5
(22) Date of filing: 25.03.2015
(51) Int. Cl.: F04D 29/18, F04D 13/02

(54) **ROTARY LIQUID GUIDING DEVICE**

(71) Applicant: Lin, Sheng-Lian, Taoyuan County 330 (TW)
(72) Inventor: SUN, Jung-Ping, Kaohsiung City (TW); WANG, Chin-Chao, Kaohsiung City (TW); WANG, Ting-kai, Fangliao Township Pingtung County (TW)
(74) Representative: Reichert & Lindner Partnerschaft Patentanwälte
(86) International application number: PCT/CN2015/075050
(87) International publication number: WO 2016/149921

(57) **Abstract**

The present invention provides a rotary liquid guiding device located in a liquid. The rotary liquid guiding device includes: a power source, a transmission portion and a liquid guiding device. The power source is for providing a power. The transmission portion is connected to the power source and transmitting the power of the power source. The liquid guiding device is connected to the transmission portion and receives the power to perform a rotational movement along a central axis and further includes: a pipe, a plurality of main blades and a plurality of auxiliary blades corresponding to the main blades in a one to one manner. The pipe is a hollow cylinder, and two ends of the pipe have an inlet side and an outlet side, respectively. Each of the main blades is a screw curved shape rotating about the central axis and extending from an inner edge surface of the pipe along the central axis to have a width. The main blade is jointed to the inner edge surface of the pipe, and an end surface of the main blade is at a distance from the inlet side. Each of the auxiliary blades is jointed to the end surface and the area closer to the inlet side is smaller. Wherein, the liquid entering from the inlet side is accommodated in an accommodating space formed by arranging the auxiliary blades in a substantially conical shape in the pipe, and the rotational movement causes the main blades to guide the liquid to the outlet side to be discharged.

## Description

### FIELD OF THE INVENTION

The present invention relates to a guiding device, and more particular to a rotary liquid guiding device capable of accelerating the discharge of the liquid having a linear displacement motion formed by a rotational movement.

### CURRENT TECHNOLOGY

In a conventional internal screw conveyor, an inner wall of a hollow pipe is jointed to a lined rubber, a screw blade is then jointed in the axial direction and finally a power source is directly connected to the screw blade to drive the screw blade to rotate, so that the solid or liquid in the hollow pipe is conveyed by the screw blade. However, when the conventional internal screw conveyor performs a conveyance, some problems such as leakage, flow rate instability and frequent failure may happen.

Based on the above problems, the manufactory has designed the outer side of the screw blade to be fixedly connected to the inner wall of the hollow pipe and to be a flat cut surface, so that the screw blade and the hollow pipe are directly rotated integrally by the power source. However, since the solid or the liquid is unable to produce a difference in flow rate on the flat cut surface of the screw blade and the hollow pipe, the solid or the liquid on the inlet side is less likely to enter the internal screw conveyor and accordingly the efficiency is poor. Therefore, how to develop an innovative structure with more ideal and practicality in view of the problems existing in the above-mentioned screw conveyor is an earnest hope of the consumers and also the goals and direction that the related industry should strive to develop and breakthrough.

### SUMMARY OF THE INVENTION

The present invention refers to a rotary liquid guiding device, in which the liquid entering from the inlet side is accommodated in an accommodating space formed by arranging the blades at the inlet side in a substantially conical shape, the liquid is guided to and discharged from the outlet side by the screw blades guide, thereby achieving an effect that the liquid can be discharged at the outlet side faster.

In order to achieve the above object, the present invention provides a rotary liquid guiding device located in a liquid. The rotary liquid guiding device includes: a power source, a transmission portion and a liquid guiding device. The power source is for providing a power. The transmission portion is connected to the power source and transmitting the power.

The liquid guiding device is connected to the transmission portion and receives the power to perform a rotational movement along a central axis. The liquid guiding device further includes: a pipe, a plurality of main blades and a plurality of auxiliary blades. The pipe is a hollow cylinder, and two ends of the pipe have an inlet side and an outlet side, respectively.

Each of the main blades is a screw curved shape rotating about the central axis and extending from an inner edge surface of the pipe along the central axis to have a width. The main blade is jointed to the inner edge surface of the pipe, and an end surface of the main blade is at a distance from the inlet side. The auxiliary blades correspond to the main blades in a one to one manner and are joined to the end surfaces. A first curve and a second curve are provided on two sides of each of the auxiliary blades, respectively. The first curve is defined as a screw curve extending from the screw curved shape of the main blade to the inlet side. The second curve is defined as an arcuate continuous curve extending from an end of the main blade adjacent to the central axis to intersect the first curve at the inlet side. Wherein, the liquid entering from the inlet side is accommodated in an accommodating space formed by arranging the auxiliary blades in a substantially conical shape in the pipe, and the rotational movement causes the main blades to guide the liquid to the outlet side to be discharged.

In one preferred embodiment, the rotary liquid guiding device further includes at least one assembly portion. The assembly portion is connected to a main body. The assembly portion can accommodate the liquid guiding device for causing the liquid guiding device to receive the power to perform the rotational movement.

### BRIEF DESCRIPTION OF THE DRAWINGS

Fig. 1 shows a schematic three-dimensional structural view of a rotary liquid guiding device of a preferred embodiment of the present invention;
Fig. 2 shows a schematic three-dimensional structural view of a rotary liquid guiding device of the second preferred embodiment of the present invention;
Fig. 3A shows a schematic three-dimensional structural view of a rotary liquid guiding device of the third preferred embodiment of the present invention;
Fig. 3B shows a schematic three-dimensional structural view of a rotary liquid guiding device of the third preferred embodiment of the present invention from another perspective;
Fig. 4 shows a schematic three-dimensional structural view of a rotary liquid guiding device of the fourth preferred embodiment of the present invention;
Fig. 5 shows a schematic three-dimensional structural view of a rotary liquid guiding device of the fifth preferred embodiment of the present invention;
Fig. 6 shows a schematic three-dimensional structural view of a rotary liquid guiding device of the sixth preferred embodiment of the present invention;
Fig. 7A shows a schematic three-dimensional structural view of a rotary liquid guiding device of the seventh preferred embodiment of the present invention;
Fig. 7B shows a schematic front structural view of a rotary liquid guiding device of the seventh preferred embodiment of the present invention.

### DETAILED DESCRIPTION OF EMBODIMENTS

In order to achieve the above objects and functions, the technical means and construction used in the present invention are described in detail with reference to the preferred embodiments of the present invention, and the features and functions thereof are as follows.

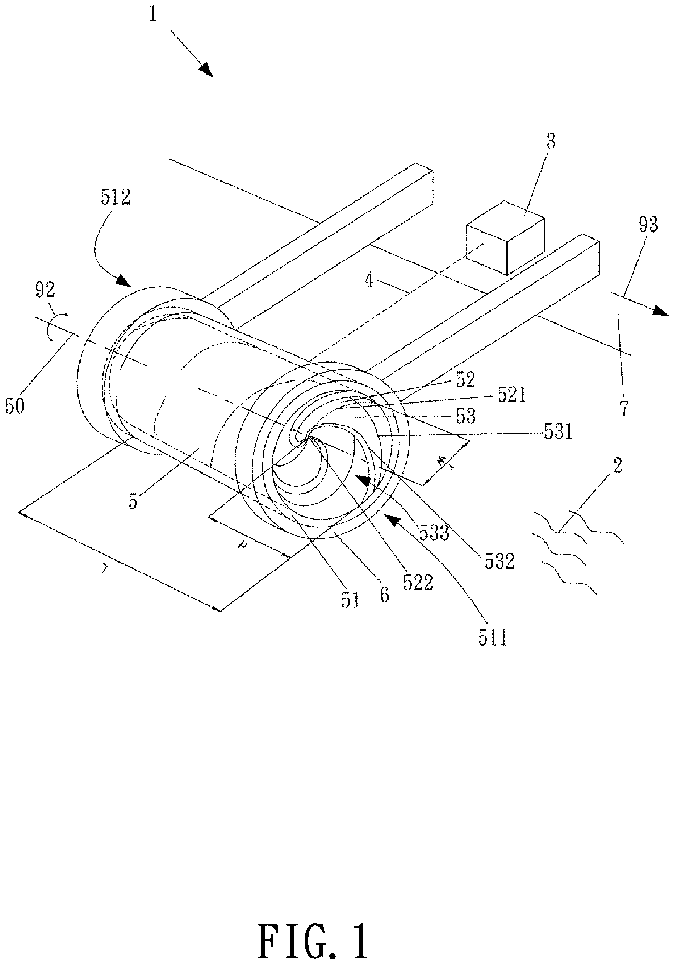

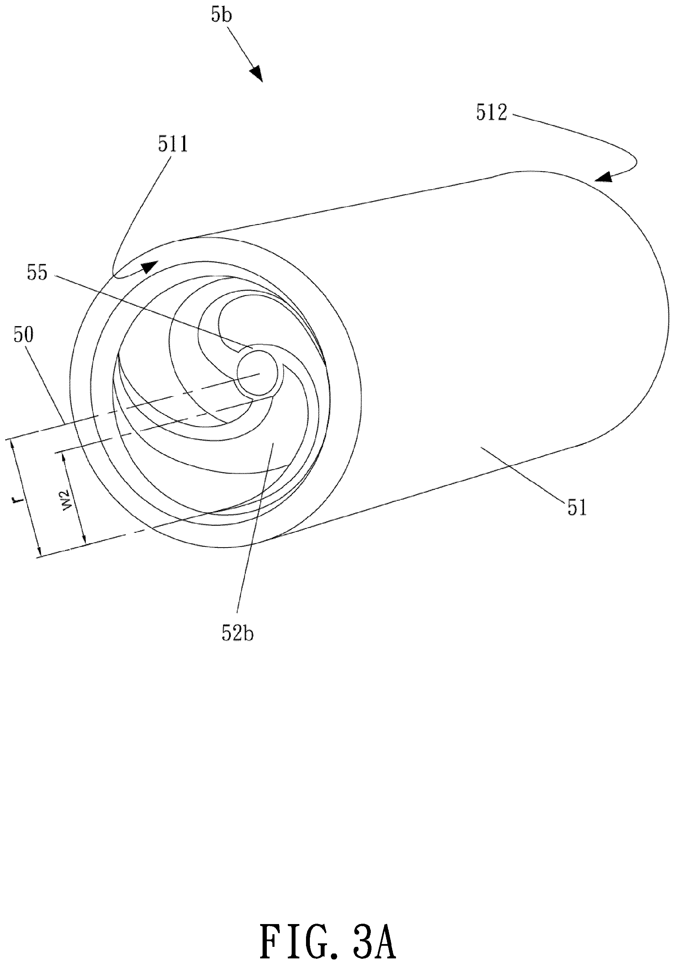

Referring to Fig. 1, which is a rotary liquid guiding device 1 of the present invention. The rotary liquid guiding device 1 is located in a liquid 2. The rotary liquid guiding device 1 includes: a power source 3, a transmission portion 4 and a liquid guiding device 5. The power source 3 is a motor, which converts a power into a power force after the power is provided. The transmission portion 4 is connected to the power source 3 and transmits the power force. The liquid guiding device 5 is connected to the transmission portion 4 and receives the power force to perform a rotational movement 92 along a central axis 50. In the preferred embodiment of the present invention, the transmission portion 4 is connected to the liquid guiding device 5 with a magnetic force, of course, the power force can cause a motor shaft (not shown) to perform a rotational movement 91. The transmission portion 4 may also be a pulley and connected to the outer edge surface of the liquid guiding device 5. In order to enable the transmission between the transmission portion 4 and the liquid guiding device 5 to be more accurate, the inner edge of the transmission portion 4 and the outer edge surface of the liquid guiding device 5 are further provided with a Gear tooth profile (not shown) having a plurality of corresponding teeth. Please also refer to Fig. 3A, the transmission portion 4 (not shown) may be located at the front end of the motor shaft 31 and is a cylinder or a gear, so that the transmission portion 4 is tightly and accurately connected to a conduction pipe 55 in the liquid guiding device 5.

The liquid guiding device 5 is integrally formed and further includes: a pipe 51, a plurality of main blades 52 and a plurality of auxiliary blades 53. The pipe 51 is a hollow cylinder and has a length L. The two ends of the pipe 51 have an inlet side 511 and an outlet side 512, respectively. In the preferred embodiment of the present invention, each of the main blades 52 is a screw curved shape that rotates about the central axis 50 and extends from the inner edge surface of the pipe 51 along the central axis 50 to have a width w. The main blade 52 is joined to the inner edge surface of the pipe 51, and an end surface 521 of the main blade 52 is spaced from the inlet side 511 by a distance d. In the preferred embodiment of the present invention, the quantity of the plurality of main blades 52 is three, and the lead of each main blade 52 is the difference (L-d) between the length L and the distance d. Of course, the quantity of the plurality of main blades 52 may be four or the other. The dimension of the width w of the main blade 52 is equal to the dimension of the inner edge radius r of the pipe 51, so that the plurality of main blades 52 is intersected on the central axis 50.

The plurality of auxiliary blades 53 correspond to the main blades 52 in a one to one manner and are joined to the end surface 521. A first curve 531 and a second curve 532 are provided on the two sides of each of the auxiliary blades 53, respectively. The first curve 531 is defined as a screw curve extending from the screw curved shape of the main blade 52 to the inlet side 511. The second curve 532 is defined as an arcuate continuous curve extending from an end 522 of the main blade 52 adjacent to the central axis 50 to intersect the first curve 531 at the inlet side 511. The liquid 2 entering from the inlet side 511 is accommodated in an accommodating space 533 formed by arranging the auxiliary blades 53 in a substantially conical shape in the pipe 51, and the rotational movement 92 causes the main blades 52 to guide the liquid 2 to the outlet side 512 to be discharged.

In the preferred embodiment of the present invention, the rotary liquid guiding device 1 further includes at least one assembly portion 6. The assembly portion 6 is connected to a main body 7. The assembly portion 6 is a bearing device which accommodates the liquid guiding device 5 and causes the liquid guiding device 5 to receive the power force to perform the rotational movement 92. Therefore, when the liquid guiding device 5 guides the liquid 2 to the outlet side 512 to be discharged, the body 7 performs a linear displacement movement 93 in the reverse direction of the discharging liquid 2.

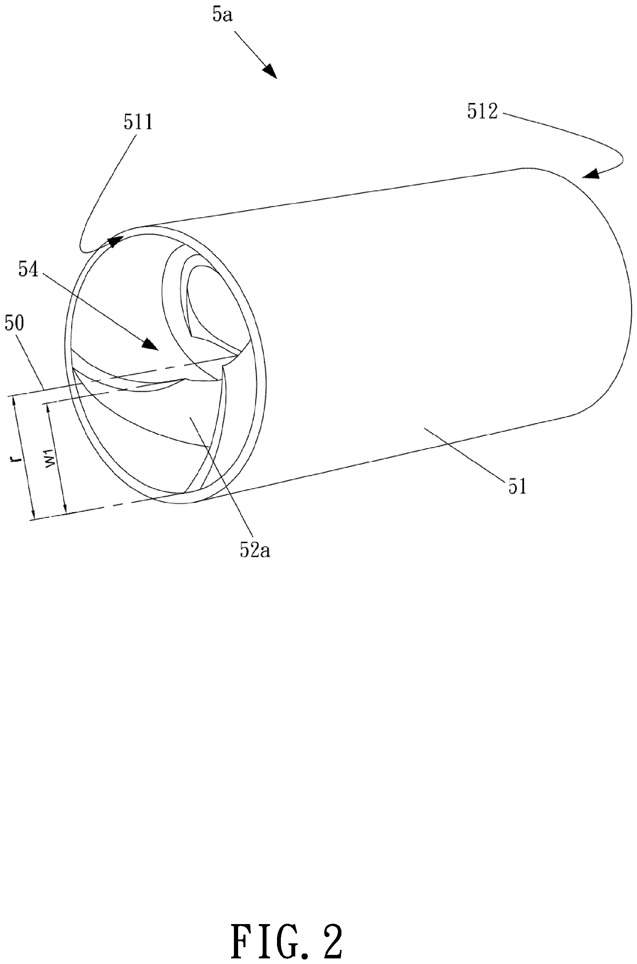

Referring to Figs. 2 to 7B, there are shown the schematic views of a three-dimensional structure and a front structure of the liquid guiding device in a plurality of preferred embodiments of the present invention. In the above-described embodiment, the dimension of the width w of the main blade 52 is equal to the dimension of the inner edge radius r of the pipe 51. However, as shown in Fig. 2, since the dimension of the width w1 of the main blade 52a is smaller than the dimension of the inner edge radius r of the pipe, a hollow portion 54 is formed in the liquid guiding device 5a and communicates directly with the inlet side 511 and the outlet side 512.

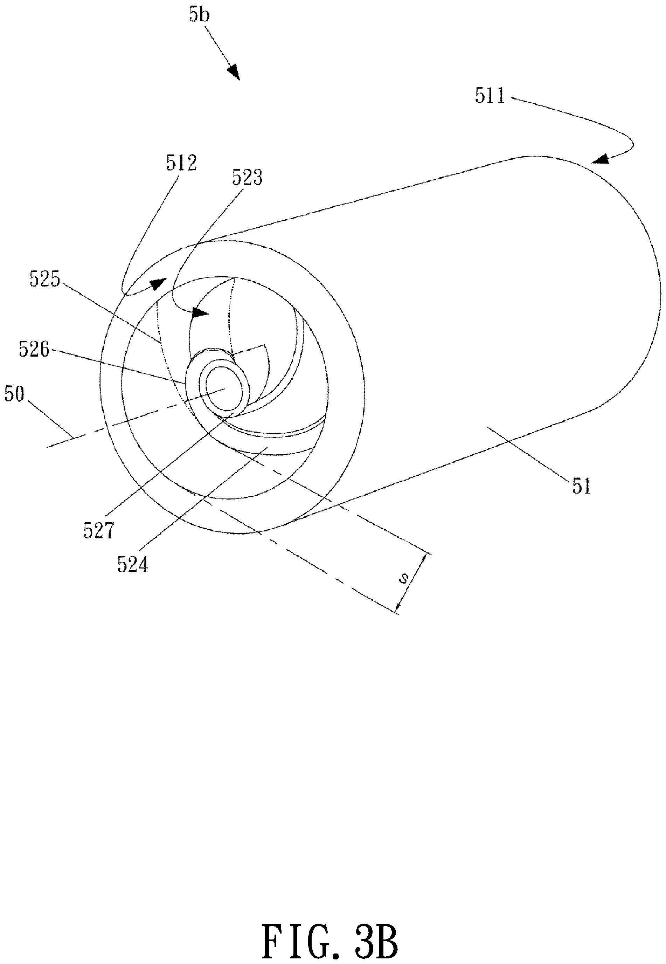

Referring again to Figs. 3A and 3B, not only the dimension of the width w2 of the main blade 52b is smaller than the dimension of the inner edge radius r of the pipe, but also a conduction pipe 55 is provided on the pipe 51. The conductive body 55 is a hollow cylinder and its outer edge surface is joined to the main blade 52b. Therefore, not only the conduction pipe 55 communicates directly with the inlet side 511 and the outlet side 512, but also can be directly connected to the transmission portion 4 (not shown). In the preferred embodiment of the present invention, the main blade 52b further has an opening 523. The opening 523 has a vertex 524. A third curve 525 and a fourth curve 526 extend from the two sides of the vertex 524 to the outlet side 512, respectively. The vertex 524 is defined as having a distance s from the outlet side 512 and is located on the inner edge surface of the pipe 51. The third curve 525 is defined as a screw curve extending from the screw curved shape of the main blade 52b to the outlet side 512. The fourth curve 526 is defined as an arcuate continuous curve extending from the vertex 524 to intersect an end 527 of the main blade 52b adjacent to the central axis 50 at the outlet side 512. By the above design, not only the discharge resistance of the liquid 2 to the outlet side 512 is reduced, but also the liquid guiding device 5b can be rotated in different directions (clockwise and counterclockwise) to achieve the same effect.

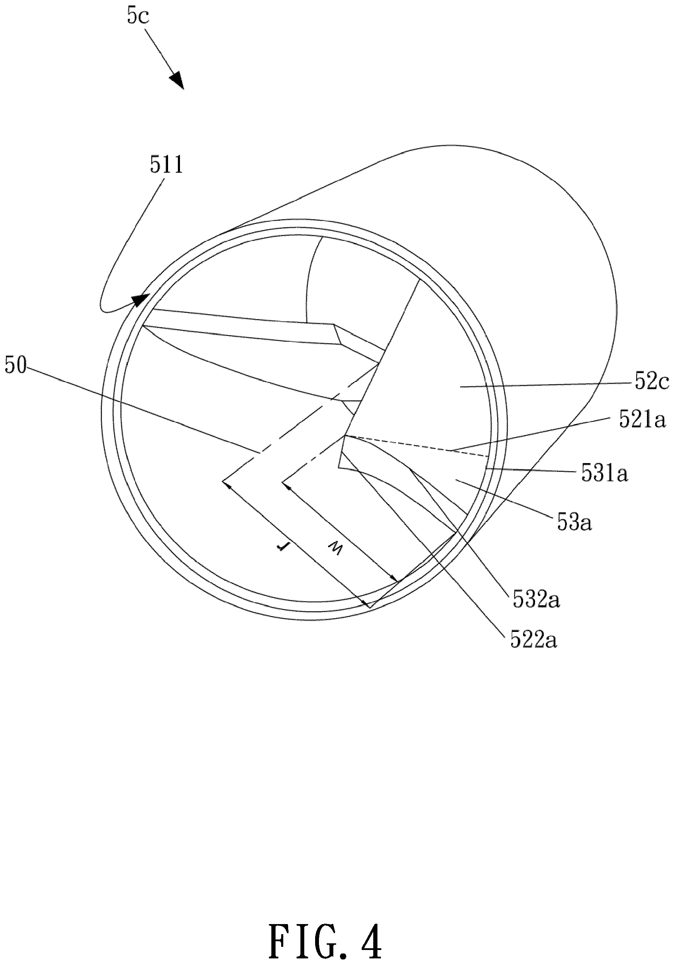

Each of the main blades 52, 52a and 52b of the above-described embodiments is a screw curved shape, which rotates about the central axis 50 and extends from the inner edge surface of the pipe 51 along the central axis 50 to have a width w. In the following embodiments as shown in Figs. 4 to 7B, unlike the above-described embodiments, each of the main blades 52c, 52d, 52e and 52f is designed as a straight line shape, which extends from the inner edge surface of the pipe 51 along the central axis 50 to have a width w. The main blades 52c, 52d, 52e and 52f are also jointed to the inner edge surface of the pipe 51, and the main blades 52c, 52d, 52e and 52f are spaced from the inlet side 511 by a distance d.

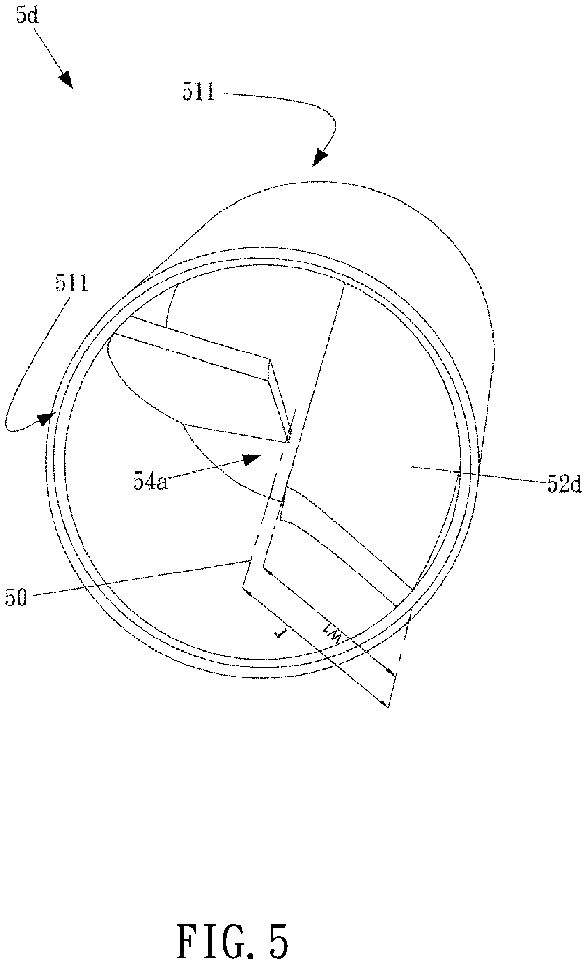

Referring first to Fig. 4, the quantity of the plurality of main blades 52c is two. The two main blades 52c are arranged in a staggered manner, and the dimension of the width w of the main blade 52c is equal to the dimension of the inner edge radius r of the pipe 51, therefore, the plurality of main blades 52c intersect at a point on the center axis 50. A first curve 531 a and a second curve 532a are provided on the two sides of each of the auxiliary blades 53a, respectively. The first curve 531a is defined as extending from the straight line shape of the main blade 52c to the inlet side 511. The second curve 532a is defined as an arcuate continuous curve extending from an end 522a of the main blade 52c adjacent to the central axis 50 to intersect the first curve 531a at the inlet side 511. Referring again to Fig. 5, the quantity of the plurality of main blades 52d is two. The two main blades 52d are arranged in a staggered manner. However, since the dimension of the width w of the main blade 52d is smaller than the dimension of the inner edge radius r of the pipe 51, a hollow portion 54a is formed in the liquid guiding device 5d and communicates directly with the inlet side 511 and the outlet side 512.

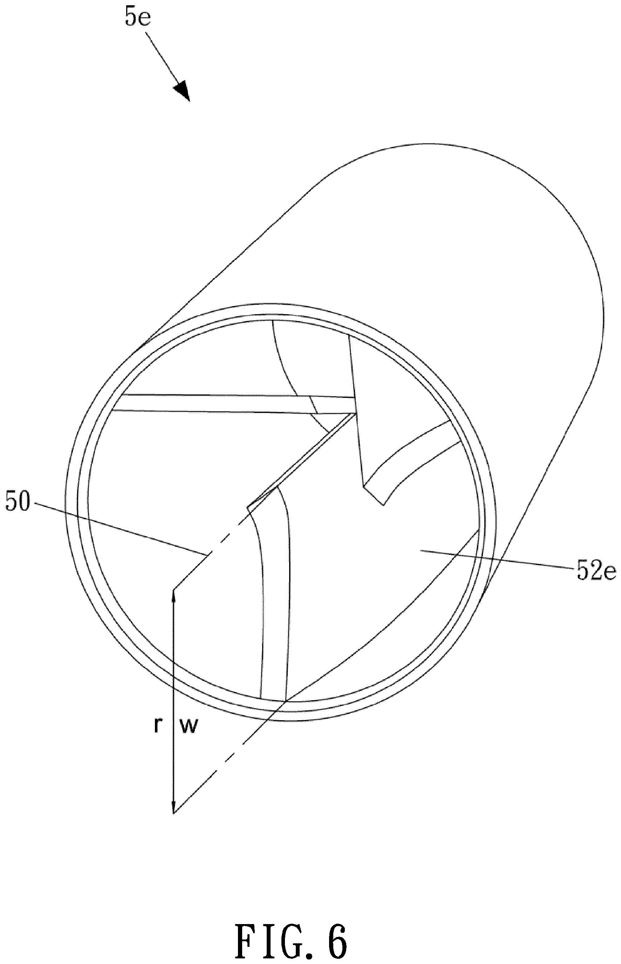

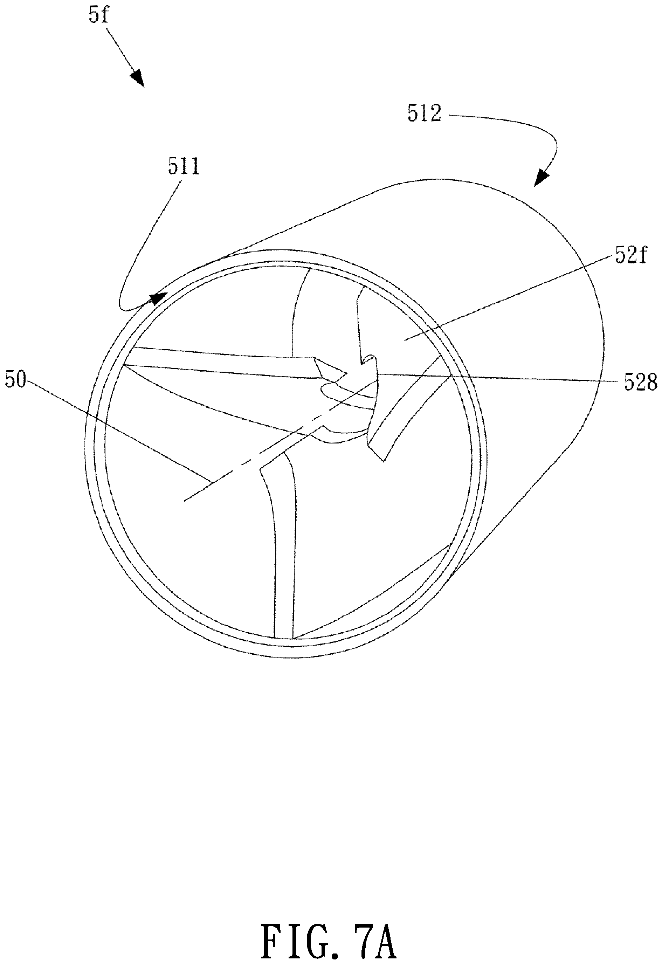

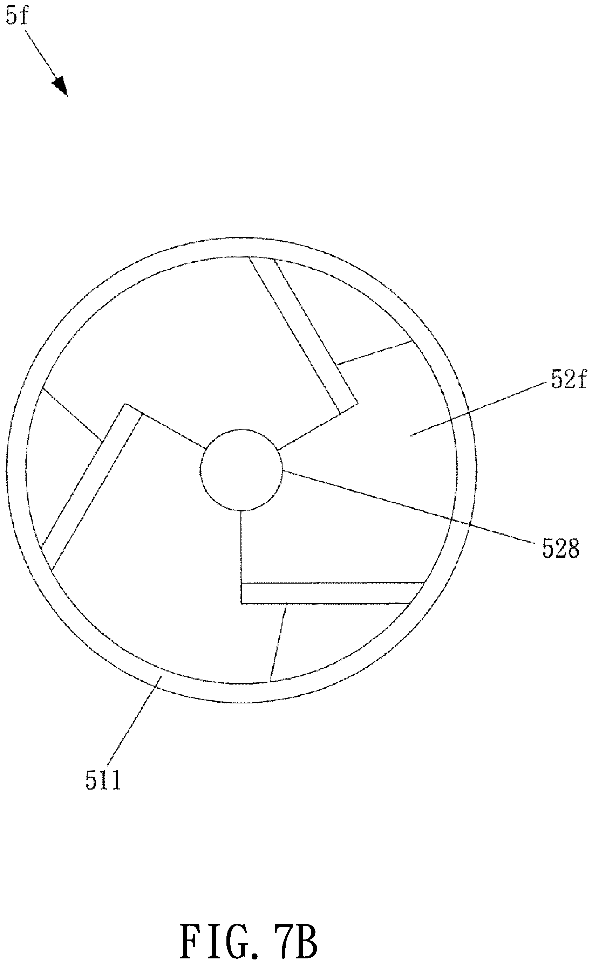

As shown in Fig. 6, the quantity of the plurality of main blades 52e is three. The three main blades 52e are arranged in a staggered manner, and the dimension of the width w of the main blade 52e is equal to the dimension of the inner edge radius r of the pipe 51, therefore, the plurality of main blades 52e intersect at a point on the center axis 50. As shown in Figs. 7A and 7B, the quantity of the plurality of main blades 52f is three. The three main blades 52f are arranged in a staggered manner. The main blade 52f further has an arc groove 528. A circular shape is formed in the direction of entering the center axis 50 by the arrangement of the plurality of arc grooves 528 and communicates directly with the inlet side 511 and the outlet side 512.

However, the foregoing is only a preferred embodiment of the present invention, and it is not intended to limit the scope of the patent of the present invention. Therefore, the simple modification and equivalent structural changes based on the use of the present invention and the contents of the drawings are intended to be included within the scope of the present invention.

## Claims

1. A rotary liquid guiding device located in a liquid, **characterized in that** the rotary liquid guiding device comprises:
a power source, for providing a power;
a transmission portion, connected to the power source and transmitting the power;
a liquid guiding device, wherein the liquid guiding device is integrally formed and connected to the transmission portion, the liquid guiding device can receive the power to perform a rotational movement along a central axis, and the liquid guiding device further comprises:
a pipe, wherein the pipe is a hollow cylinder, and two ends of the pipe have an inlet side and an outlet side, respectively;
a plurality of main blades, wherein each of the main blades is a screw curved shape rotating about the central axis and extending from an inner edge surface of the pipe along the central axis to have a width, the main blade is jointed to the inner edge surface of the pipe, and an end surface of the main blade is at a distance from the inlet side;
a plurality of auxiliary blades, wherein the auxiliary blades correspond to the main blades in a one to one manner and are joined to the end surfaces, a first curve and a second curve are provided on two sides of each of the auxiliary blades, respectively, the first curve is defined as a screw curve extending from the screw curved shape of the main blade to the inlet side, the second curve is defined as an arcuate continuous curve extending from an end of the main blade adjacent to the central axis to intersect the first curve at the inlet side;
wherein, the liquid entering from the inlet side is accommodated in an accommodating space formed by arranging the auxiliary blades in a substantially conical shape in the pipe, and the rotational movement causes the main blades to guide the liquid to the outlet side to be discharged.

2. The rotary liquid guiding device according to claim 1, **characterized in that** the pipe has a length and a quantity of the main blades is three, and a lead of each of the main blades is a difference between the length and the distance.

3. The rotary liquid guiding device according to claim 1, **characterized in that** a dimension of the width is smaller than a dimension of an inner edge radius of the pipe.

4. The rotary liquid guiding device according to claim 3, **characterized in that** the pipe further has a conduction pipe, the conduction pipe is a hollow cylinder and an outer edge surface thereof is jointed to the main blade.

5. The rotary liquid guiding device according to claim 4, **characterized in that** the transmission portion is connected to the conduction pipe.

6. The rotary liquid guiding device according to claim 1, **characterized in that** the main blade further has an opening, the opening has a vertex, a third curve and a fourth curve extend from two sides of the vertex to the outlet side, respectively, the vertex is defined as having a space from the outlet side and is located on the inner edge surface of the pipe, the third curve is defined as a screw curve extending from the screw curved shape of the main blade to the outlet side, and the fourth curve is defined as an arcuate continuous curve extending from the vertex to intersect an end of the main blade adjacent to the central axis at the outlet side.

7. The rotary liquid guiding device according to claim 1, **characterized in that** the transmission portion is connected to the liquid guiding device with a magnetic force.

8. The rotary liquid guiding device according to claim 1, **characterized in that** the rotary liquid guiding device further comprises at least one assembly portion, the assembly portion is connected to a main body, the assembly portion can accommodate the liquid guiding device for causing the liquid guiding device to receive the power to perform the rotational movement.

9. A rotary liquid guiding device located in a liquid, **characterized in that** the rotary liquid guiding device comprises:
a power source, for providing a power;
a transmission portion, connected to the power source and transmitting the power;
a liquid guiding device, wherein the liquid guiding device is integrally formed and connected to the transmission portion, the liquid guiding device can receive the power to perform a rotational movement along a central axis, and the liquid guiding device further comprises:
a pipe, wherein the pipe is a hollow cylinder, and two ends of the pipe have an inlet side and an outlet side, respectively;
a plurality of main blades, wherein each of the main blades is a straight line shape extending from an inner edge surface of the pipe along the central axis to have a width, the main blade is jointed to the inner edge surface of the pipe, and an end surface of the main blade is at a distance from the inlet side;
a plurality of auxiliary blades, wherein the auxiliary blades correspond to the main blades in a one to one manner and are joined to the end surfaces, a first curve and a second curve are provided on two sides of each of the auxiliary blades, respectively, the first curve is defined as extending from the straight line shape of the main blade to the inlet side, the second curve is defined as an arcuate continuous curve extending from an end of the main blade adjacent to the central axis to intersect the first curve at the inlet side;
wherein, the liquid entering from the inlet side is accommodated in an accommodating space formed by arranging the auxiliary blades in a substantially conical shape in the pipe, and the rotational movement causes the main blades to guide the liquid to the outlet side to be discharged.

10. The rotary liquid guiding device according to claim 9, **characterized in that** a quantity of the main blades is two.

11. The rotary liquid guiding device according to claim 9, **characterized in that** a quantity of the main blades is three.

12. The rotary liquid guiding device according to claim 9, **characterized in that** a dimension of the width is smaller than a dimension of an inner edge radius of the pipe.

13. The rotary liquid guiding device according to claim 9, **characterized in that** the transmission portion is connected to the liquid guiding device with a magnetic force

14. The rotary liquid guiding device according to claim 9, **characterized in that** the rotary liquid guiding device further comprises at least one assembly portion, the assembly portion is connected to a main body, the assembly portion can accommodate the liquid guiding device for causing the liquid guiding device to receive the power to perform the rotational movement.

15. The rotary liquid guiding device according to claim 9, **characterized in that** the main blade further has an arc groove, and a circular shape is formed in the direction of entering the center axis by an arrangement of the plurality of arc grooves.
